Europäisches Patentamt

**European Patent Office**

Office européen des brevets

(19)

(11) Publication number: **0 072 033**
A2

(12)

# EUROPEAN PATENT APPLICATION

(21) Application number: **82107290.7**

(22) Date of filing: **11.08.82**

(51) Int. Cl.³: **G 01 F 1/32**

(30) Priority: **11.08.81 JP 126970/81**

(43) Date of publication of application: **16.02.83**
**Bulletin 83/7**

(84) Designated Contracting States: **DE FR GB**

(71) Applicant: **MITSUBISHI DENKI KABUSHIKI KAISHA, 2-3, Marunouchi 2-chome Chiyoda-ku, Tokyo 100 (JP)**

(72) Inventor: **Wada, Shunichi, c/o Mitsubishi Denki K.K. Himeji Works, No. 840, Chiyoda-cho Himeji-shi Hyogo (JP)**

(74) Representative: **Lehn, Werner, Dipl.-Ing. et al, Hoffmann, Eitle & Partner Patentanwälte Arabellastrasse 4 (Sternhaus), D-8000 München 81 (DE)**

(54) **Air flow rate measuring device and an internal combustion engine using the same.**

(57) An air flow rate measuring device for use with an internal combustion engine in which a signal accurately representing the air flow rate of intake air in an intake air passage (1) of the engine is always available. A first signal ($V_4$) is generated which is dependent upon the frequency of vortex generation in a vortex stream in the intake air passage (1). A second signal ($V_s$) is generated which is dependent upon an average air flow rate in the intake air passage (1). By using these signals together, an accurate indication of the air flow rate in the intake air passage (1) is continuously provided.

EP 0 072 033 A2

# AIR FLOW RATE MEASURING DEVICE AND AN INTERNAL COMBUSTION ENGINE USING THE SAME

The present invention pertains to an air flow rate measuring device (air flow rate meter) having means for providing a first signal representing a frequency of vortex generation in a stream of vortices, and to. an internal combustion engine using the air flow rate measuring device.

A von Kármán type flow meter and a swirl type flow meter have recently been used as air flow rate meters. Both types of flow meter provide an output signal having a frequency component approximately proportional to the flow rate of intake air. Such an output signal accurately representing an air flow rate is obtainable over a fairly wide range of air flow rate. A typical example of such an output signal is a pulse signal whose level rises in response to the detection of a vortex. Since the formation of vortices quickly follows transient variations in the air flow velocity, the output signal responds quickly to the air flow velocity. However, it is impossible to indicate changes in actual air flow rate within a time interval shorter than one period (an interval between pulses) of the output signal. Accordingly, the response of the output signal is still not as fast as desirable. Further, in the case where each period of the output signal is measured to detect the air flow rate, if the actual flow rate varies greatly during one period of the output signal, the resultant rate indicated by the output signal may be much different from the actual flow rate. There is another difficulty in that a stable output cannot be obtained without an averaging process where an average over a number of periods of the output signal is taken because the period of the output signal tends to fluctuate due to distortions in the shapes of the vortices. This defect is deleterious to a system in which the fuel flow rate or the exhaust gas of an automobile is controlled on the basis of the flow rate of intake air. Further, since the conventional vortex flow meter operates to detect the frequency of formation of vortices, it is disadvantageous in that, upon occurrence of turbulence, the formation of vortices is distorted resulting in an error in the output signal.

It is an object of the present invention to eliminate or at least to reduce the above-described drawbacks accompanying prior art flow meters.

According to one aspect of the invention, there is provided an air flow rate measuring device having means for providing a first signal representing a frequency of vortex generation in a stream of vortices characterised by means for producing a second signal representing an average flow rate of vortices in said stream.

According to another aspect of the invention, there is provided an internal combustion engine having an air intake passage and a said air flow rate measuring device according to said one aspect.

One embodiment of an air flow rate measuring device according to the present invention, will now be described, by way of example, with reference to the accompanying drawings, in which:

Figure 1 is a circuit diagram of a preferred embodiment of a vortex-type air flow rate measuring device; and

Figure 2 is a waveform diagram showing signal waveforms at various points in the circuit of Figure 1.

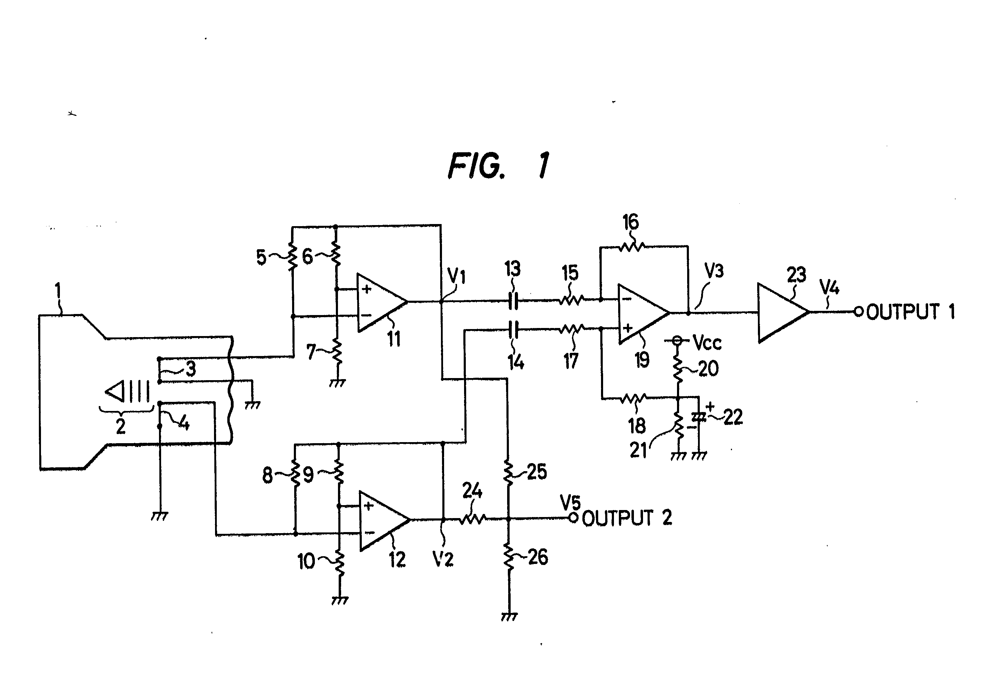

Figure 1 shows an air intake passage 1 and a vortex generator 2. A pair of heater wires 3 and 4 are disposed downstream of the vortex generator 2. The temperature of the wire 3 and hence its resistance is maintained constant or regulated by a circuit which includes resistors 5, 6 and 7 and an operational amplifier 11, while the temperature of the wire 4 and hence its resistance is maintained constant or regulated by a circuit which includes resistors 8, 9 and 10 and an operational amplifier 12. The controlled voltages supplying the heater wires 3 and 4 are designated by $V_1$ and $V_2$, respectively. An alternating signal $V_3$ representing the difference between these voltages $V_1$ and $V_2$ is produced by a differential amplifier circuit composed of capacitors 13, 14 and 22, resistors 15, 16, 17, 18, 20 and 21, and an operational amplifier 19. The signal $V_3$ is shaped by a waveform shaping circuit 23 to produce a pulsed frequency output signal $V_4$, i.e., an output 1, the pulse frequency of which varies in proportion to the rate of vortex generation in the intake air passage. On the other hand, the signals $V_1$ and $V_2$ are summed by a network composed of resistors 24, 25 and 26 to produce an analog DC output signal $V_5$, i.e., an output 2, the voltage level of which varies in accordance with the average flow rate of air in the passage 1.

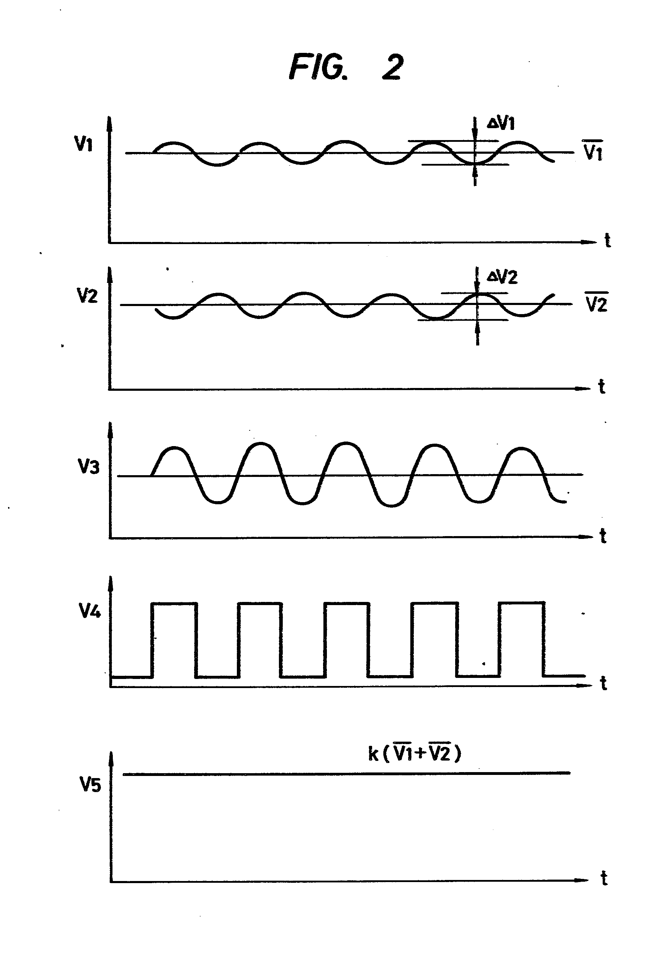

The waveforms of the various signals indicated in Figure 1 are shown in Figure 2. In the air flow measuring device of Figure 1, downstream of the vortex generator 2 are generated a stream of von Kármán vortices in a pattern which is regular and symmetric with respect to a line extending directly downstream from the vortex generator 2. The wires 3 and 4 are cooled down partly by the ambient flow and partly by the stream of von Kármán vortices, i.e. cooling of the wires 3 and 4 is effected by the passage of vortices and also as a function of the mean flow of air in the passage. Control voltages $V_1$ and $V_2$ are generated which attempt to maintain the respective heating wires at a constant temperature. The control voltages $V_1$ and $V_2$ thus have DC components $\bar{V}_1$ and $\bar{V}_2$ corresponding to the mean flow velocity and AC (frequency) components $\Delta V_1$ and $\Delta V_2$ corresponding to the time varying cooling produced by the von Kármán vortices. The components $\Delta V_1$ and $\Delta V_2$ have opposite polarities owing to the manner of vortex formation and the positions of the wires 3 and 4. By forming the difference of those two signals, a signal $V_3$ of increased amplitude but with the same frequency as either of $\Delta V_1$ and $\Delta V_2$ is produced. Thus, the pulsed output signal $V_4$, produced by wave shaping the signal $V_3 = K_1 (\Delta V_1 - \Delta V_2)$, where $K_1$ is a gain factor, has a frequency which varies in proportion to the rate of vortex production and hence in proportion to the flow rate.

The components $\bar{V}_1$ and $\bar{V}_2$ are functions of the mean flow velocity M, as described by $V_1 = V_2 = (a + bU^{1/2})^{1/2}$, where a and b are constants. The time varying components $\Delta V_1$ and $\Delta V_2$ in the signals $V_1$ and $V_2$ are cancelled upon summing the signals $V_1$ and $V_2$ because the components $V_1$ and $V_2$ are

equal in amplitude but opposite in sign. The resultant signal $V_5$ can thus be expressed as $V_5 = V_1 + V_2 = k\bar{V}_1 = k\bar{V}_2$. The resultant signal $V_5$ is highly responsive to changes in the average air flow rate.

By effectively using both of the signals $V_4$ and $V_5$, it is possible to realize an automotive air flow rate measuring device which is highly precise and responsive.

By averaging either the period or the frequency of the output $V_4$ for a relatively long period of time, the air flow rate can be very accurately indicated. On the other hand, during transients in the air flow rate, if the above-described averaging process, requiring a long period of time, were utilized, the response speed would not be adequate. Therefore, during times when transients are occurring, the averaging period is shortened so that the air flow rate can be detected with a higher response speed. The presence of transients is detected using the output signal $V_5$, which responds very quickly to change in the air flow rate.

Although the foregoing embodiment has been described with reference to a case where von Kármán vortices are detected by means of paired heater wires, similar effects can be produced in the case of a swirl type vortex flow meter or by using one or more than two heater wires. Furthermore, although the description thus far is directed to cases where the vortex detecting structure employs heater wires, similar effects can be achieved if thermistors or other heat-sensitive elements are employed.

0072033

The use of a pair of heater wires is advantageous in that even if one of the paired heater wires is broken so that the frequency signal fails, the analog signal representing the mean flow velocity can be used as a backup signal. Also, if the formation of vortices is disturbed due to transients in the intake air flow or an undesired air flow in a backward direction caused by misfiring or the like, a precise indication of the air flow rate is nevertheless still provided by the analog signal $V_5$.

As described above, an air flow rate meter having a simple construction is provided which produces a frequency output signal having a frequency proportional to the vortex frequency and an analog signal having an amplitude corresponding to an average air flow rate to thereby eliminate the drawbacks accompanying prior art air flow meters in which only a frequency output signal is employed to indicate the air flow rate.

Thus, the described flow meter according to the invention provides an air flow rate measuring device in which both a frequency signal and an analog signal are produced to represent the intake air flow rate of an internal combustion engine. The frequency signal is a pulse output signal in which the frequency of the pulses is directly proportional to the instantaneous flow rate of vortices in an intake air passage. The analog signal has an amplitude which varies in correspondence with the average air flow velocity. By the use of these two signals, an accurate indication of the air flow rate in the intake passage is always available.

Claims:

1. An air flow rate measuring device having means (3 to 23) for providing a first signal ($V_4$) representing a frequency of vortex generation in a stream of vortices characterised by means (3 to 12 and 24 to 26) for producing a second signal ($V_5$) representing an average flow rate of vortices in said stream.

2. A device according to claim 1 wherein said means for providing said first signal is such that the first signal has a frequency dependent upon said frequency of vortex generation.

3. A device according to claim 1 or 2 wherein said means for providing said second signal is such that the second signal has an amplitude dependent upon said average flow rate.

4. A device according to any one of claims 1 to 3 wherein said means for providing said first signal and said means for providing said second signal each comprise at least one heating element (3, 4) disposed in said stream of vortices.

5. A device according to claim 4 wherein there are provided two said heating elements.

6. A device according to claim 5 wherein said heating elements are disposed so as to provide output signals therefrom having frequency varying components out of phase with one another.

7. A device according to claim 6 wherein there is provided means (11, 12) for amplifying said output signals from said heating elements.

8. A device according to claim 7 wherein said means for providing said first signal comprises means (13 to 24) for forming a signal representing a difference between the amplified output signals of said two amplifying means; and wherein said means for providing said analog signal comprises means (24 to 26) for summing outputs of said two amplifying means.

9. A device according to any one of claims 1 to 8 wherein an air intake passage (1) is provided in which said stream of vortices can be generated.

10. An internal combustion engine having an air intake passage and characterised by an air flow rate measuring device according to any one of the preceding claims for measuring air flow rate in said passage.

FIG. 1

0072033

# FIG. 2